# EUROPEAN PATENT APPLICATION

(11) **EP 0 789 489 A2**
(43) Date of publication of application: **13.08.1997**
(21) Application number: 96402238.8
(22) Date of filing: 21.10.1996
(51) Int. Cl.: H04N 5/926

(54) **Apparatus and method for video signal recording and reproducing for digital video cassette tape recorder**

(30) Priority: 06.02.1996 KR 9602846
(71) Applicant: LG ELECTRONICS INC., Seoul (KR)
(72) Inventor: Kim, Yung Gil, Seocho-Ku, Seoul (KR); Sheen, Yong Hoo, Kwonsun-Ku, Kyungki-Do (KR); Joh, Joong Kwon, Dongan-Ku, Anyang, Kyungki-Do (KR); Kim, Jae Ryong, Kangnam-Ku, Seoul (KR); Woo, Sang Joon, Kyungki-Do (KR); Lee, Dong Hwa, Dobong-Ku, Seoul (KR); Choi, Man Chul, Seoul (KR); Lee, Je Hyoung, Kangnam-Ku, Seoul (KR); Kwon, Tae Kyung, Sunganm, Kyungki-Do (KR); Lee, Sang Mun, Seoul (KR); Bark, Tae Suck, Seoul (KR); Lee, Doo Hee, Anyang, Kyungki-Do (KR); Min, Kyoung Il, Seoul (KR); Lim, Soon Ki, Seoul (KR); Park, Tae Joon, Seoul (KR)
(74) Representative: Loisel, Bertrand

(57) **Abstract**

An improved video signal recording and reproducing apparatus and a method thereof for a digital video cassette tape recorder, which are capable of recording and reproducing a digital video signal using a common video tape by maintaining a normal recording/reproducing speed when a high density tape is used by judging the type of the tape having a predetermined recording wavelength, dividing and recording the digital video data in multiple tracks by changing the recording/reproducing speed in case of a low density tape, and recording a block division information corresponding to the divided tracks, which includes a controller (27) for variably controlling a recording/reproducing speed (25) by judging the type of the video tape (28) in a recording or reproducing mode, a formatter (21) for inserting a block division information into a track of the video tape in the recording mode and for removing the block division information in accordance with a track reference signal during reproduction when varying the recording/reproducing speed, and a clock selector (26) for selectively outputting a predetermined clock signal which is appropriate for the recording/reproducing signal processing when varying the recording/reproducing speed.

## Description

### BACKGROUND OF THE INVENTION

### 1. Field of the Invention

The present invention relates to an apparatus and a method for video signal recording and reproducing for a digital video cassette tape recorder (DVCR), and particularly to an improved apparatus and a method for video signal recording and reproducing for a digital video cassette tape recorder, by which it is possible to divide a digital signal outputted from a source into multiple tracks and then record and reproduce the digital signal by judging the type of a video tape having a predetermined recording wavelength and by controlling the recording/reproducing speed of the tape at a proper running speed.

### 2. Description of the Conventional Art

Generally, a digital video cassette tape recorder (DVCR) is directed to recording a digital video signal outputted from a digital broadcast source such as an advanced television system, a cable decoder, and a satellite broadcast signal receiver onto a video tape magnetic recording medium and to reproducing a recorded digital video signal therefrom.

This DVCR includes an integrated receiver decoder (IRD), which is an exclusive receiver for receiving a digital video signal outputted from a digital broadcast source, for thus recording the received digital video signal onto a video tape using a video signal processing means and for reproducing the recorded digital video signal.

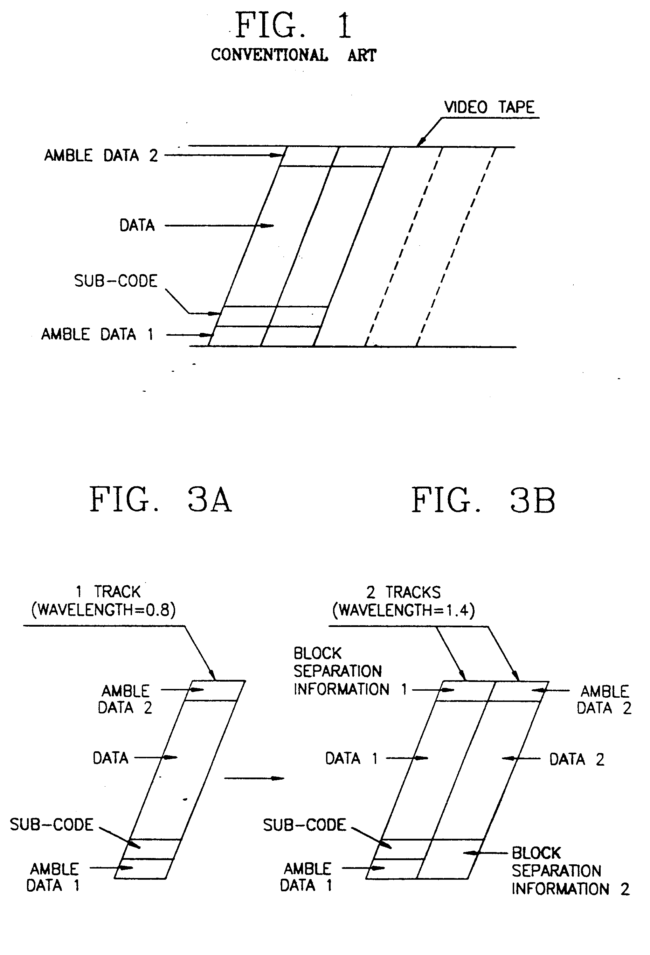

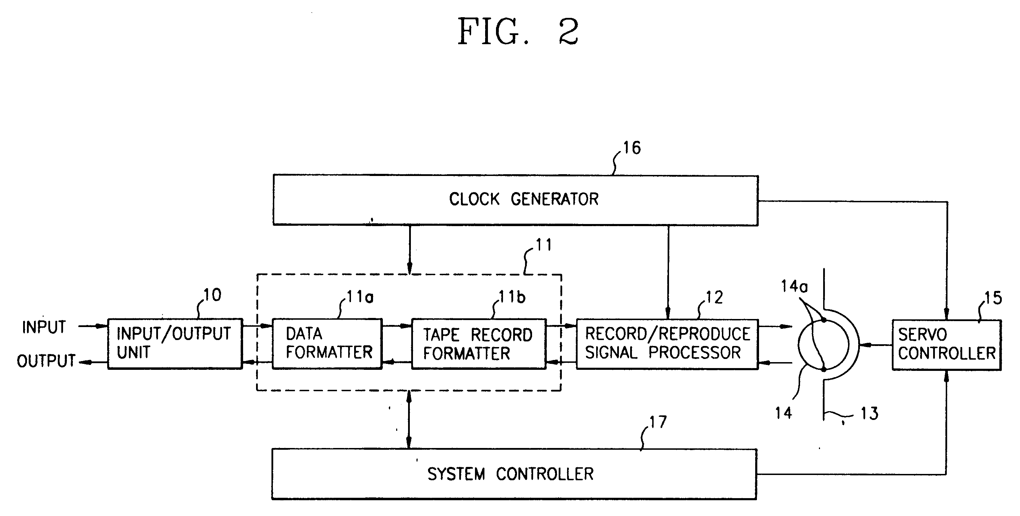

A digital VHS VCR (DVHS) is a type of DVCR directed to recording digital video signals on a video tape in the recording pattern as shown in Figure 1 and reproducing the recorded digital signal.

Here, one track of the tape includes a first amble data region which is recorded at the start portion of each track and indicates the start of the track, a sub-code region which contains certain information concerning a recording/reproducing operation, a main data region which contains a video information, and a second amble data which is recorded at the end portion of each track and indicates the end of the track.

The above-mentioned digital signal is received through the IRD (not shown). A format unit formats the video signal. A signal processor modulates the signal, and then the signal is recorded on a video tape in the pattern as shown in Figure 1. The signal reproduced from the video tape is demodulated by the signal processor, and formatted by the format unit and then is outputted. Here, the rotation speed of a head drum in the recording/reproducing mode is 1800rpm which is the same as in the conventional VHS VCR.

Here, the digital tape, that is, a super VHS (SVHS) type tape, is generally used which has a recording wavelength of 0.8µm rather than the 1.4µm of the common VHS tape type so as to more effectively record/reproduce a large quantity of digital information thereon without recording/reproducing loss and noise as compared with an analog video signal.

Figure 2 shows a video signal recording/reproducing apparatus of a conventional DVHS VCR, which includes an input/output unit 10 connected with an IRD for receiving a digital video signal and for outputting a reproduced digital video signal, a format formation unit 11 including a data formatter unit 11a connected to the input/output unit 10 for formatting and error correction of the data and a tape recording formatter unit 11b connected to the data formatter unit 11a for forming the formatted data into a recording format of the video tape, a recording/reproducing signal processor 12 connected to the format formation unit 11 for performing the record signal processing and reproduce signal process including a modulation and demodulation of the digital video signal, a head drum 13 provided with a video head 14a for recording the record signal outputted from the recording/reproducing signal processor 12 onto the video tape 13 or reproducing the digital video signal recorded on the video tape 13 and outputting the reproduced signal to the recording/reproducing signal processor 12, a servo controller 15 for controlling the running of the video tape 13 and the rotation of the head drum 14, a clock generator 16 for outputting a format clock signal to the format formation unit 11, a clock signal, which is necessary to record and reproduce the digital signal to the recording/reproducing signal processor 12, and a reference clock signal for the servo control to the servo controller 15, and a system controller 17 for controlling the data formatting process of the format formation unit 11 and the servo controller 15.

The operation of the video signal recording/reproducing apparatus of the conventional DVHS VCR will now be explained with reference to Figure 2.

To begin with, the operation of the video signal recording and reproducing apparatus in the recording mode will be first explained.

The digital signal transmitted from the digital broadcast source is received through the IRD (not shown), and then inputted to the data format unit 11a of the format formation unit 11 through the input/output unit 10.

The data format unit 11a corrects the errors in the inputted digital signal, generates an additional information (a sub-code) to be recorded as shown in Figure 1, and then outputs the formatted data to the tape recording format unit 11b, and the tape recording format unit 11b changes the inputted formatted data into a pattern to be recorded on the video tape 13, generates the recording timing and then outputs the data to the recording/reproducing signal processor 14.

Here, the format formation unit 11 receives a clock signal, which is necessary to form a format, from the clock generator 16 and a driving clock signal and a control signal (for generation and reading of an additional data) from the system controller 17, performs a data processing, and then outputs the processed data to the recording/reproducing signal processor 12. The recording/reproducing signal processor 12 performs a record processing of the digital signal inputted thereto in accordance with the recording clock signal outputted from the clock generator 16 and transmits the processed signal to the video head 14a of the head drum 14.

Therefore, the servo controller 15 controls the running of the video tape 13 and the rotation of the head drum 14. In the case of the DVHS VCR, the head drum 14 is rotated at 1800rpm like in the VHS VCR. The digital signal is recorded on the S-VHS tape 13 in the pattern as shown in Figure 1.

The operation of the video signal recording/reproducing apparatus of the DVHS VCR as shown in Figure 2 in the reproducing mode is performed in the reversed order of the recording mode.

That is, the video tape 13 is normally transported in accordance with the control of the servo controller 15. The head drum 14 is rotated at 1800rpm, and the digital signal recorded on the video tape 13 is reproduced in cooperation with the video head 14a.

The recorded digital signal is reproduced by the head 14a and input to the recording/reproducing signal processor 12, and then is demodulated by the tape recording format unit 11b. The errors in the reproduced signal are corrected by the data format unit 11a, and then the error-corrected reproduced signal is outputted through the input/output unit 10.

However, as shown in Figure 1, since the recording pattern of the video signal recording/reproducing apparatus of the conventional DVHS VCR is completely different from the recording pattern of the analog broadcast, the high density recording/reproducing tape is exclusively used.

When recording/reproducing the digital broadcast using the DVHS VCR, since it is only possible to record/reproduce using the high density SVHS tape, the recording density becomes lowered when using the common type tape used for recording/reproducing the analog signal, so that the effective recording/reproducing of the digital signal is difficult.

In addition, the recording density difference is referred to the recording wavelength of the tape. Generally, in case of the common type video tape, the effective recording wavelength is about 1.4µm, and the effective recording wavelength of the SVHS tape is about 0.8µm.

Therefore, as shown in Figure 1, when recording a digital data outputted from the same source, it is possible to record it as one track on the high density SVHS tape having an effective wavelength of 0.8µm. In case of the low density VHS tape having an effective wavelength of about 1.4µm, since the recording wavelength is longer, and the region on which the data is recorded is limited, it is impossible to record the digital data as one track on the tape.

That is, in the conventional art, the high density video tape should be exclusively used for recording and reproducing the digital signal.

In addition thereto, the widely used video tape for the analog VCR can not be used for recording and reproducing the digital signal.

When a user reproduces using the common video tape in the DVHS VCR after recording the same in the DVHS VCR, and a desired picture is not displayed, the user may think there may be operational error in the VCR or video tape. So as to overcome the above-mentioned problems, even when the DVHS VCR is equipped with a VHS recording failure apparatus, the user may still think there are operational problems when the common video tape is not displayed thereby. That is, the user must carefully operate the system.

### SUMMARY OF THE INVENTION

Accordingly, it is an object of the present invention to provide a video signal recording and reproducing apparatus and a method thereof for a digital video cassette tape recorder, which overcomes the problems encountered in a conventional video signal recording and reproducing apparatus and a method thereof for a digital video cassette tape recorder.

It is another object of the present invention to provide a video signal recording and reproducing apparatus and a method thereof for a digital video cassette tape recorder, which are capable of recording and reproducing the digital signal using a common video tape by maintaining the current recording/reproducing speed when the high density tape is used by judging the type of the tape having a predetermined recording wavelength, dividing and recording the data as much as one track of the high density tape by changing the recording/reproducing speed in case of the low density tape, and recording the block divide information corresponding to the divided track.

It is still another object of the present invention to provide a video signal recording and reproducing apparatus and a method thereof for a digital video cassette tape recorder, which are capable of automatically judging whether or not the high density video tape is used when the common video tape is not used and are capable of automatically controlling the recording/reproducing speed in accordance with the above-mentioned judgement.

It is still another object of the present invention to provide a video signal recording and reproducing apparatus and a method thereof for a digital video cassette tape recorder, by which the compatibility of the video tape is improved by recording/reproducing the digital signal using the widely used common video tape.

It is still another object of the present invention to provide a video signal recording and reproducing apparatus and a method thereof for a digital video cassette tape recorder, which are capable of automatically changing the recording and reproducing speed in accordance with the type of tapes, so that it is possible to record and reproduce the digital signal using the high density video tape and the low density video tape, and thus the user can more easily use the system.

It is still another object of the present invention to provide a video signal recording and reproducing apparatus and a method thereof for a digital video cassette tape recorder, which are capable of automatically selecting a proper clock frequency which is supplied to the signal processing unit in accordance with the recording/reproducing speed in a corresponding mode such as a recording mode or a reproducing mode when varying the recording/reproducing speed.

It is still another object of the present invention to provide a video signal recording and reproducing apparatus and a method thereof for a digital video cassette tape recorder, which are capable of improving reliability of the system when recording and reproducing the digital signal by recording and reproducing the block divide information which indicates the relationship of the track with respect to the divided track in accordance with a recording and reproducing speed in a corresponding mode such as a recording mode or a reproducing mode when varying the recording/reproducing speed.

To achieve the above objects, in accordance with an embodiment of the present invention, there is provided a video signal recording and reproducing apparatus for a digital video cassette tape recorder of the present invention, which includes means for variably controlling a recording/reproducing speed by judging the type of a video tape in a recording or reproducing mode; means for inserting a block separation information into a track of a video tape in the recording mode or for removing the block separation information in accordance with a track reference signal when varying the recording/reproducing speed; and means for selectively outputting a predetermined clock signal which is appropriate for the recording/reproducing signal process when varying the recording/reproducing speed.

To achieve the above objects, in accordance with another embodiment of the present invention, there is provided a video signal recording and reproducing method for a digital video cassette tape recorder of the present invention, which includes the steps of a first step for judging the type of a tape in the recording mode; a second step for maintaining a recording speed at one speed in case of a high density tape as a result of the judgement and for varying the recording speed at a predetermined speed in accordance with the type of a tape in case of a low density tape; a third step for inserting a block separation information as an information indicating a relativity between neighboring tracks of a digital signal when varying the recording speed; and a fourth step for selectively outputting a clock signal which corresponds to the recording signal process with respect to the recording speed variation.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Figure 1 is a diagram showing the pattern of a digital signal recorded on a video tape in a conventional DVHS-VCR;
Figure 2 is a schematic block diagram of a video signal recording and reproducing apparatus of a conventional DVHS-VCR;
Figures 3A and 3B are diagrams showing in Figure 3A an example of a digital data recording pattern of one track on a S-VHS tape and, in Figure 3B, recorded on two tracks of a common tape type according to the present invention;
Figures 4A and 4B are diagrams showing the construction of a block divide information according to the present invention;
Figure 5 is a schematic block diagram of a video signal recording/reproducing apparatus of a DVHS-VCR according to a first embodiment of the present invention;
Figures 6A through 6D are diagrams showing signal timings in the apparatus of Figure 5;
Figure 7 is a schematic block diagram of a video signal recording/reproducing apparatus of a DVHS-VCR according to a second embodiment of the present invention;
Figure 8 is a schematic block diagram of a video signal recording/reproducing apparatus of a DVHS-VCR according to a third embodiment of the present invention;
Figure 9 is a flow chart showing a control operation in the recording mode according to the present invention; and
Figure 10 is a flow chart showing a control operation in the reproducing mode according to the present invention.

### DETAILED DESCRIPTION OF THE INVENTION

Figures 3A and 3B show the formats of a digital video signal as recorded on a video tape. As shown therein, the digital video signal which can be recorded on one track of the SVHS having a recordable wavelength of 0.8µm is divided into two tracks and recorded on the common video tape having a recordable wavelength of 1.4µm.

That is, since the recordable wavelength of the SVHS video tape which is used in the DVHS VCR is 0.8µm, and the recordable wavelength of the common video tape which is used in the common VHS VCR is 1.4µm, the digital video signal corresponding to one track on the SVHS tape can be divided into two tracks and then recorded on the common video tape. The digital video signal can be recorded on and reproduced from the common video tape by varying the rotation of the head drum and the tape transferring speed to 2x speed.

In addition, the control of the track divide, the rotation of the head drum, and the running speed of the tape can be made by detecting the type of the tape. The type of the tape is detected as a high density tape or a low density tape in accordance with the recording wavelength.

When varying the recording and reproducing speed in accordance with the type of the tape, a predetermined ratio should be proportional to the recordable wavelength of the detected tape, and the ratio becomes an integer number of times.

For example, when recording a digital video signal, which can be recorded on one track of the S-VHS tape having a recordable wavelength of 0.8µm, on the common tape having a recordable wavelength of 1.4µm, since only two tracks are necessary, it is possible to record the digital video signal data of as much as one track of the S-VHS tape on two tracks of the common tape by varying the rotation speed of the head drum and the tape running speed to 2x speed.

Here, in the case of the common tape, the rotation speed of the head drum is varied from 1800rpm to 3600rpm, and the data which is divided into two parts has a new track format.

Namely, as shown in Figure 3B, a first amble data, a sub-code, a first data region, and a first block divide information region are recorded in sequential order on the first track among the tracks for recording the data which is divided into two parts, and a second block divide information region, a second data region, and a second amble data region are recorded in sequential order on the second track.

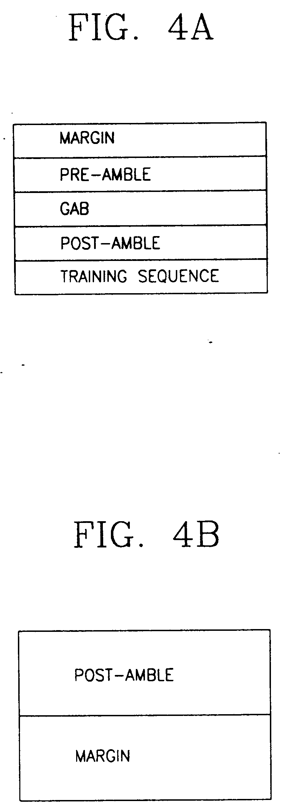

The first data region and the second date region in Figure 3B each contain one-half of the data contained in the data region as shown in Figure 3A. The contents of the first block divide information and the second block divide information are shown in Figures 4A and 4B.

Namely, the first block divide information region recorded at the recording end position of the first track, as shown in Figure 4A, includes a margin region for a head switching timing in the recording mode and for a head timing in the reproducing mode, a pre-amble region for the start portion of the data, a gap region for providing a predetermined margin between neighboring data regions, a post-amble region for the end portion of the data, and a training sequence region for the data reproducing and the signal processing by the recording/reproducing processing unit.

In addition, the second block divide information region, as shown in Figure 4B, includes a post-amble region for indicating the end portion of the data, and a margin region for a head switching timing during the recording mode, and a head timing in the reproducing mode.

Here, the first and second block separation information regions may respectively include the first amble data and the second amble data as in the conventional DVHS VCR and may have the same data format.

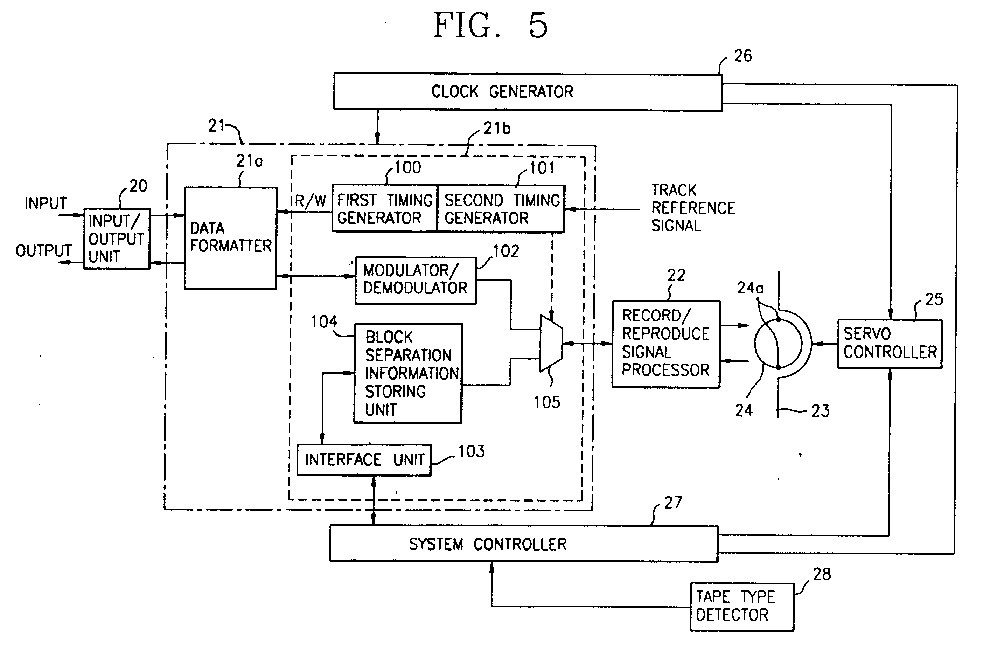

Figure 5 shows the construction of a video signal recording and reproducing apparatus for a digital VCR according to a first embodiment of the present invention, which includes an input/output unit 20 connected to an IRD for receiving a digital video signal to be recorded and for outputting a reproduced digital video signal, a format formation unit 21 for converting the digital video signal inputted thereto in accordance with the recording mode or the reproducing mode into a tape recording format in the recording mode and for outputting an output signal in the reproducing mode, a recording/reproducing signal processor 22 connected to the format formation unit 21 for performing a recording/reproducing operation including a modulation and demodulation of the digital video signal, a head drum 24 having a video head 24a for recording the recording signal outputted from the recording/reproducing signal processor 22 onto the video tape 23, or reproducing the recorded video digital signal and outputting the reproduced signal to the recording/reproducing signal processor 22, a servo controller 25 for controlling the running of the video tape 23 and the rotation of the head drum 24, a clock generator 26 for supplying a format clock signal to the format formation unit 21 and a clock signal which is necessary for a recording and reproducing operation of the digital video signal to the recording/reproducing signal processor 22, and a reference clock signal of the servo control to the servo controller 15, a system controller 27 for determining a recording mode or a reproducing mode by judging the type of the tape and for generating a system driving clock signal and performing the system control in accordance with the determined mode, and a tape type detector 28 for detecting the type of the video tape 23 and for outputting the detection to the system controller 27.

The format formation unit 21 includes a data formatter unit 21a for generating an error correction signal with respect to the data inputted thereto in accordance with a recording mode or a reproducing mode and an additional information (a sub-code) and the like which are to be recorded on the video tape 23, and a tape recording formatter unit 21b for forming the digital signal into a predetermined format which is recordable on the tape in accordance with the recording mode/reproducing mode and for generating a recording timing.

The tape recording formatter unit 21b includes a first timing generator 100 for generating a timing for reading a signal to be recorded from a memory (not shown) of the data formatter unit 21a and a sub-code and a timing for writing the reproduced signal in the memory, a second timing generator 101 for generating a recording timing of a tape in the recording mode in accordance with a track reference signal and for generating a demultiplexing timing of the data in the reproducing mode, a modulation/demodulation unit 102 for modulating the formatted digital video signal for recording and for demodulating the reproduced signal, a block division information storing unit 103 for storing a block division information to be recorded on the tape, a multiplexor 104 for sequentially connecting the modulation/demodulation unit 102 and the block separation division storing unit 103 to the recording/reproducing signal processor 22 in accordance with the control of the second timing generator 101, and an interface unit 105 for inputting/outputting the block division information between the system controller 27 and the block division information storing unit 103.

Here, the block division information storing unit 104 may include a shift register or a memory.

One method for detecting the type of the tape involves a tape type detector 28 having an optical sensor. In this embodiment, when a hole is not detected in the cassette by the optical sensor, it is judged that the common tape is used in the system.

Alternatively or additionally, in case of the recording mode, the digital video signal can be partially recorded on the tape, for thus detecting the error correction code ECC, and in case of the reproducing mode, the recorded digital signal is partially reproduced, for thus detecting the error correction code ECC. When the detected error rate is less than a previously set reference value, the tape is judged as the S-VHS tape, and when the detected error correction code is more than the reference value, the tape is judged as the common video tape.

The operation of the video signal recording/reproducing apparatus for a digital VCR according to the first embodiment of the present invention will now be explained with reference to the accompanying drawings.

To begin with, the operation in the recording mode will be first explained.

The digital video signal transmitted from the digital broadcasting source is received through the IRD (not shown) and then transmitted to the format formation unit 21 through the input/output unit 20.

The data formatter unit 21a of the format formation unit 21 corrects the errors in the inputted digital video signal, generates the additional information (the sub-code) to be recorded, and then outputs the error corrected signal to the tape recording formatter unit 21b. The tape recording formatter unit 11b formats the inputted digital signal into a pattern recordable on the video tape 23, generates a recording timing and then outputs the formatted signal to the recording/reproducing signal processor 24.

Here, the format formation unit 21 receives a clock signal, which is necessary for the format formation from the clock generator 26 and a driving clock signal and a control signal (for the generation and judgement of the additional data) from the system controller 17.

The recording/reproducing signal processor 22 processes the inputted formatted digital signal in accordance with the recording clock signal outputted from the clock generator 26 and then outputs the processed signal to the video head 24a of the head drum 24. The servo controller 27 controls the running of the video tape 23 and the rotation of the head drum 24, for thus recording the digital video signal on the video tape 23.

When recording such a digital video signal on the video tape 23, the type of the tape is judged, and the rotation speed of the head drum 24 and the running speed of the video tape 23 are variably controlled in accordance with the tape type.

Namely, the tape type detector 28 detects the type of the video tape and then outputs the detection result to the system controller 27. The system controller 27 judges whether the VCR is currently in the recording mode or the reproducing mode, and receives the tape type detection signal and judges the type of the tape.

For example, it is judged whether the tape currently inserted in the DVHS VCR is the S-VHS tape having a recordable wavelength of 0.8µm or the common VHS tape having a recordable wavelength of 1.4µm.

As a result, when the tape is judged in the recording mode as the S-VHS tape, the system controller 27 outputs a control data at one speed (1800rpm) with respect to the speed control of the head drum 24 and the tape 23 to the servo controller 56, and when the tape is judged as the common VHS tape, the system controller 27 outputs a control data for 2x speed (3600rpm) operation, thus varying the rotation of the head drum 24 and the running speed of the tape. However, the control data is not limited to 2x speed, but may be variable with respect to the recordable wavelength of a tape.

Therefore, the running speed of the head drum 24 and the tape 23 is controlled to 2x speed in accordance with the control data for 2x speed operation, and the digital video signal recordable as one track on the SVHS as shown in Figure 3A is divided into two tracks as shown in Figure 3B, and then recorded on two tracks of the common video tape. Here, there is a relativity between the data recorded on the two tracks.

The system controller 27 controls the format formation unit 21 to insert and record the block division information as an information indicating the relativity of the neighboring tracks, so that when the recorded information is read out in the reproducing mode and the information of the tracks related to each other is batch-processed, a more clear and accurate digital video signal is continuously reproduced.

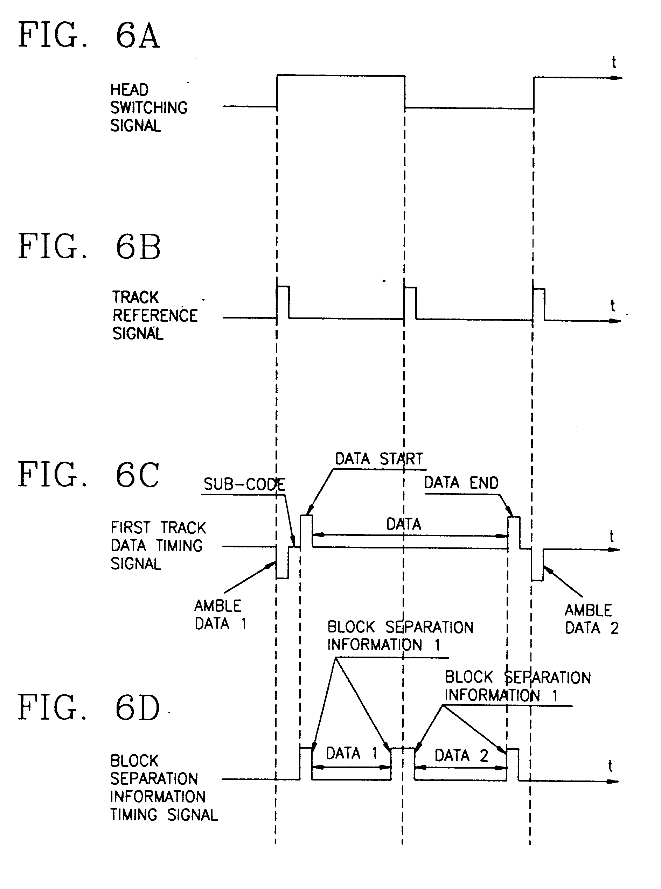

The above-mentioned operation will now be described in more detail with reference to Figure 6.

The second timing generator 101 generates a track reference signal from a head switching signal as shown in Figure 6A, counts the signal as shown in Figure 6B using the track reference signal as a reference, determines the recording position of the information having the format and structure as shown in Figures 3A through 4B, and then controls the multiplexor 104 in accordance with the determined timing.

Here, the recording timing of each information is determined as shown in Figure 6C. The recording position of the first block division information and the second block division information which indicate the relativity between the tracks is referred to the timing as shown Figure 6D.

The multiplexor 104 is connected to the modulation/demodulation unit 102 at the time when the digital signal stored in the memory (not shown) of the data formatter unit 21a is recorded.

At this time, the first timing generator 100 outputs a timing signal to the data formatter unit 1a for reading the digital signal stored in the memory (not shown) of the data format unit 21a so as to read the stored signal, and the read-out signal is modulated by the modulation/demodulation unit 102 and then is recorded on a first track of the video tape 23 in cooperation with the multiplexor 104 and the recording/reproducing signal processor 24.

Next, when the second timing generator 101 generates a recording position timing signal of the first block division information, and the multiplexor 104 is connected to the block division information storing unit 103.

At this time, the first timing generator 100 controls the data formatter unit 21a so that the reading operation of the digital signal stored in the memory (not shown) of the data formatter unit 21a can be stopped, and the system controller 27 controls the interface unit 105 so as to output the first block division information stored in the block division information storing unit 103, and then the first block division information outputted from the block division information storing unit 103 as shown in Figure 4A is recorded on the end portion of the first track of the video tape 23 in cooperation with the multiplexor 104 and the recording/reproducing signal processor 24.

Thereafter, when the recording of the first block division information is finished, the second timing generator 101 outputs the recording position timing signal of the second block division information, so that the multiplexor 104 is connected to the block separation information storing unit 103, and the system controller 27 controls the interface unit 105 so that the second block division information stored in the block division information storing unit 103 is outputted, and then the second block division information as shown in Figure 4B is recorded on the front portion of the second track.

After the second block division information is recorded, and when the timing for recording the digital signal recorded in the memory (not shown) of the data formatter unit 21a is reached, the multiplexor 104 is connected to the modulation/demodulation unit 102. The digital signal read from the memory (not shown) of the data formatter unit 21a is modulated in cooperation with the read timing signal outputted from the first timing generator 100, and then is recorded on the second track of the video tape 23 through the multiplexor 104 and the recording/reproducing signal processor 24.

Therefore, as the above-mentioned operation is repeated in 2x speed recording mode, the digital signal is recorded on the video tape 23 in the recording format as shown in Figure 4B.

When reproducing the recorded digital signal, the reproducing mode operation is performed in the reversed order of the recording mode.

Namely, the video tape 23 is run at a normal speed in accordance with the control of the servo controller 25, and the head drum 24 is rotated, and the recorded signal is read by the video head 24a. The thusly read digital signal is reproduce-processed by the recording/reproducing signal processor 22. The modulated data which was packetized by the tape recording formatter unit 25 is demodulated and depacketized, and the error correction thereof is performed by the data formatter unit 21a and then the reproduced digital video signal is outputted through the input/output unit 20. At this time, the reproducing speed is determined and controlled in accordance with the detection of the tape type.

In the reproducing mode, the system controller 27 receives the signal outputted from the tape type detector 28 and judges whether the current tape is the S-VHS tape having a recordable wavelength of 0.8µm or the common VHS tape having a recordable wavelength of 1.4µm.

As a result of the judgement, when the type of the tape in the reproducing mode is judged the S-VHS tape, the system controller 27 supplies the control data related to the rotation speed of the head drum 24 and the running speed of the tape at 1x speed, and when it is judged the common tape, the system controller 27 supplies the control data at 2x speed.

Here, the control data is not limited to 2x speed, but variable corresponding to the recordable wavelength of the tape.

For the common tape, when controlling the rotation speed of the head drum and the running speed of the tape at 2x speed, the digital video data divided into two tracks as shown in Figure 3B.

The system controller 27 controls the format formation unit 21 so as to cause the block division information indicating the relativity between the neighboring tracks to be reproduced, and the thusly reproduced block division information binds and outputs the information having a track relativity by reading out in the reproducing mode, a more clear and accurate operation can be continuously reproduced.

Namely, when the signal reproduced from the video tape 23 is processed by the recording/reproducing signal processor 22 and then inputted to the tape recording formatter unit 21b, the multiplexor 105 counts the track reference signal from the second timing generator 101 and receives the reproduced position timing signal, and then the reproduced signal outputted from the recording/reproducing signal processor 22 is selectively outputted to the modulation/demodulation unit 102.

For example, the multiplexor 23 is connected to the modulation/demodulation unit 102 during a predetermined portion of the reproduced signal where the data except for the block division information among the digital video signal recorded on two tracks is reproduced, and the reproduced data inputted from the recording/reproducing signal processor 22 is modulated, and the thusly modulated data is stored in the memory (not shown) of the data formatter unit 21a in accordance with the write timing signal from the first timing generator 100.

Thereafter, at the position of the reproduced signal where the block division information is reproduced, the first timing generator 100 controls the data formatter unit 21a so as to terminate the writing operation of the memory (not shown), and then only the digital data is processed by the data format unit 21a. At this time, the reproduced block division information is processed to obtain information of the relativity between the neighboring tracks.

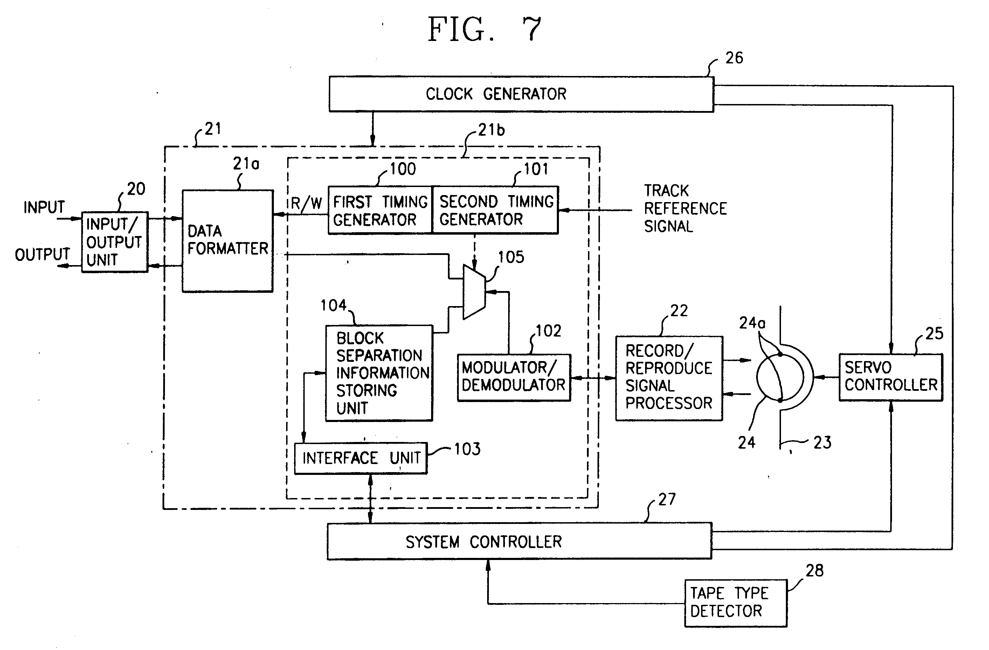

Figure 7 shows a video signal recording/reproducing apparatus for a digital VCR according to a second embodiment of the present invention. In this embodiment, the modulation/demodulation unit 102 which was connected between the data formatter unit 21a and the multiplexor 105 in the first embodiment is instead connected between the multiplexor 105 and the recording/reproducing signal processor 22.

Therefore, when the multiplexor 105 is connected to the data formatter unit 21b and the modulation/demodulation unit 102 in accordance with the control of the second timing generator 101, in the recording mode, the digital signal is modulated by the modulation/demodulation unit 102 and then is supplied to the recording/reproducing signal processor 22. In the reproducing mode, the reproduced digital signal from the recording/reproducing signal processor 22 is demodulated by the modulation/demodulation unit and then is outputted to the data formatter unit 21a.

In addition, when the multiplexor 105 is connected to the block division information storing unit 104 in accordance with the control of the second timing generator 101, the first block division information and the second block division information stored in the block division information storing unit 104 in the recording mode are modulated by the modulation/demodulation unit 102, and then outputted to the recording/reproducing signal processor 22.

Therefore, although there are a signal transfer and switching path changes between the first and second embodiments. In the second embodiment it is possible to achieve the same object as the first embodiment of the present invention. In particular, because the second embodiment of the present invention is directed to connecting the modulation/demodulation unit 102 between the multiplexor 105 and the recording/reproducing signal processor 22, in the recording mode, it is possible to achieve a desired modulation with respect to the block division information.

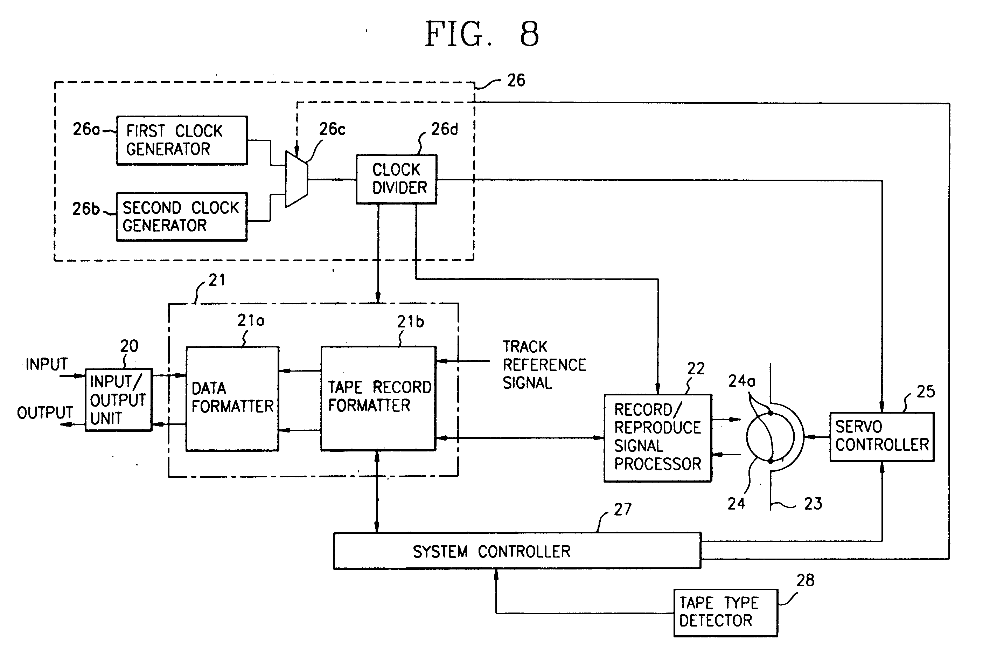

Figure 8 shows the construction of a video signal recording/reproducing apparatus for a digital VCR according to a third embodiment of the present invention. Namely, the third embodiment is directed to judging the type of the tape in the recording or reproducing mode, recording the digital signal in accordance with the result of the judgement, and reproducing the recorded digital signal. In more detail, this embodiment is directed to selecting a predetermined clock signal which is necessary for the digital signal processing. Here, the same elements as in the first and second embodiments are given the same reference numerals with respect to the third embodiment.

The clock generator 26 includes a first clock generator 26a for generating a first clock signal, a second clock generator 26b for generating a second clock signal, a clock selector 26c for selecting the first or second clock signals in accordance with the control of the system controller 22 in the recording and reproducing modes, and a clock divider 26d for dividing the clock signal selected by the clock selector 26c and for outputting the selected clock signal to the format formation unit 21, the recording/reproducing signal processor 22, the servo controller 25, and the like.

Here, the first clock signal has a clock frequency which is necessary for recording and reproducing the digital signal on the S-VHS tape in the recording and reproducing mode at 1x speed, and the second clock signal has referred clock frequency which is necessary to record or reproduce the digital signal of the common tape in the recording or reproducing mode at 2x speed.

Therefore, in the recording or reproducing mode, the system controller 27 judges the type of the inserted tape, and as a result of the judgement, when the tape is referred to the S-VHS tape (at 1x speed), the clock signal from the first clock generator 26a is selected in accordance with the control of the clock generator 26c, and if as a result of the judgement, the inserted current tape is the common tape (at 2x speed), the clock signal from the second clock generator 26b is selected in accordance with the control of the clock selector 26c.

The clock signal selected by the clock selector 26c is inputted to the clock separator 26d and divided and then is outputted as a format formation clock signal to the format formation unit 21, as a recording or reproducing clock signal to the recording/reproducing signal processor 22, and as a reference clock signal to the servo controller 25.

Therefore, it is possible to record/reproduce the digital signal on/from the common tape by supplying a proper clock signal so that a proper signal processing is obtained in accordance with the result of the judgment of the tape type, and it is possible to achieve a more reliable and accurate signal processing.

Here, since the clock variation is increased for the amount of data of the block division information, the clock frequency used in the recording/reproducing mode becomes high.

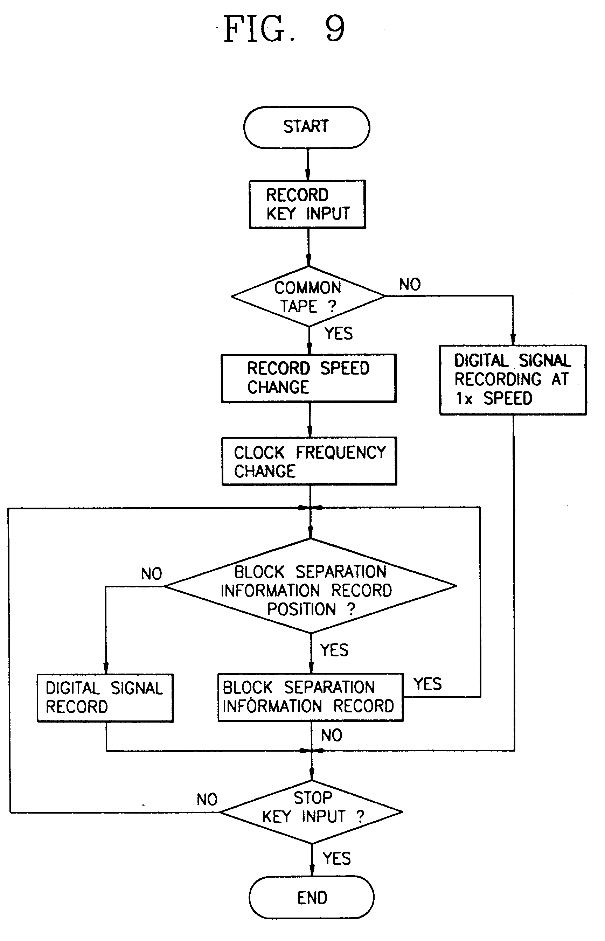

Figure 9 shows the control method in the recording mode of the video signal recording/reproducing apparatus for a digital VCR according to the present invention.

As shown therein, when the recording key is inputted and operated, and the system controller 27 detects the key input. The type of the tape is judged from the signal detected by the tape type detector 28.

As a result of the judgement, when the current tape is judged as the S-VHS tape, the system controller 27 controls the corresponding elements so that the digital data can be processed and recorded at 1x speed.

However, when the current tape is judged as the common tape, the system controller 27 supplies a speed variation control data to the servo controller 25 and then controls the rotation speed of the head drum 24 and the running speed of he tape at 2x speed. In addition, the system controller 27 controls the clock selector 26c of the clock generator 26, thus selecting the clock signal outputted from the second clock generator 26b to be outputted to the corresponding elements, so that the format formation, the process of the recording data formatting, and the record processing are performed in accordance with the clock signal outputted from the second clock generator 26b.

In addition, the recording position is counted so as to selectively record the block division information at a predetermined position at which the block division information is to be inserted, and to selectively record the digital data at the positions where the block division information is not inserted.

Therefore, the above-mentioned recording operation is continuously performed until the stop key is actuated, so that a speed variation control of the recording speed and a proper clock rate selection is performed in accordance with the type of the tape.

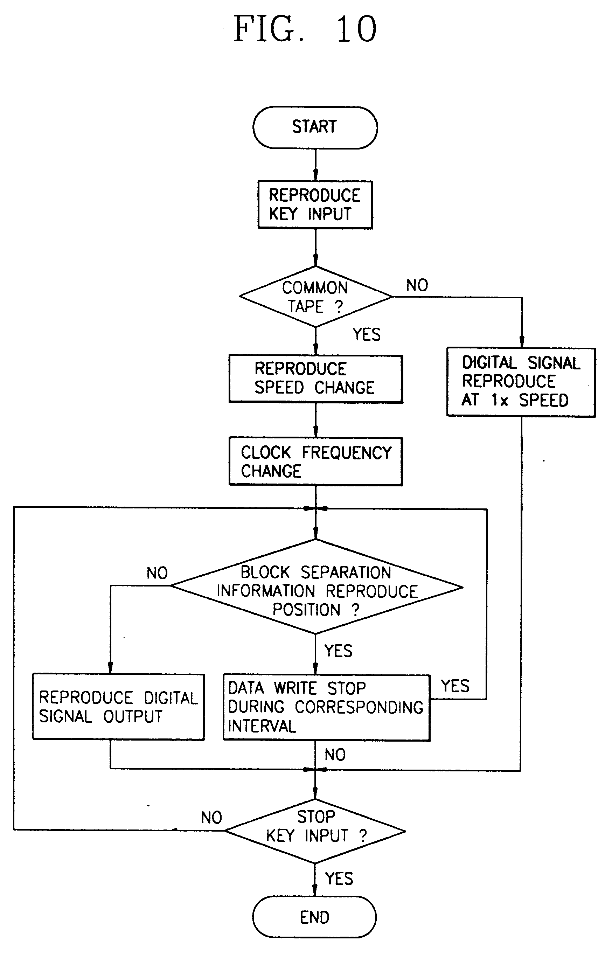

Figure 10 shows a flow chart of the control method in the reproducing mode of the video signal reproducing apparatus for a digital VCR according to the present invention.

When the reproducing key is actuated, the system controller 27 detects the key input, and the type of the tape is judged in accordance with the signal from the tape type detector 28.

As a result of the judgement, when the current is the S-VHS tape, the system controller 27 controls the corresponding elements for the reproduction and processing of the digital signal at 1x speed.

However, when the current tape is judged as the common tape, the system controller 27 supplies the speed variation data to the servo controller 25, to control the rotation speed of the head drum 24 and the running speed of the tape at 2x speed, and controls the clock signal selector 26c of the clock generator 26 so as to select the clock signal generated from the second clock generator 26b to be transferred to corresponding elements, so that the format formation and the processing of the reproduced formatted data are performed in accordance with the clock signal outputted from the second clock generator 26b.

In addition, the positions where the block division information is recorded are counted. At the positions where the block division information is inserted, the reading (output) operation of the memory (not shown) of the data format unit 21 is stopped, and at other position of the track, the reproduced digital signal is selected and is outputted.

The above-mentioned operation is continuously performed until the stop key is actuated. Therefore, the speed variation control of the recording speed, and a proper clock rate selection are performed in accordance with the type of the tape.

As described above, the video signal recording/reproducing apparatus and method for a digital video cassette tape recorder are directed to recording/reproducing the digital signal on/from a high density video tape as well as a low density video tape.

In addition, when the video tape is inserted in the system, the type of the tape is detected and then a proper recording and reproducing speed is automatically determined and controlled in accordance with the tape type detection so as to prevent data loss, thus achieving an easy use of the system and preventing the confusion in its use.

In addition, since the digital video signal can be recorded on the common video tape, and the recorded digital signal can be reproduced, the tape compatibility is increased.

When the digital video signal is divided into multiple tracks in accordance with the type of the tape and is recorded thereon, the block division information indicating the relativity between neighboring tracks is recorded and reproduced, so that it is possible to achieve a reliable recording/reproducing operation of the data without loss or error.

When the digital video signal is divided into multiple tracks in accordance with the type of the tape and is recorded and the thusly divided and recorded digital signal is reproduced, a proper clock rate is automatically selected in accordance with the type of the tape, so that it is possible to achieve a reliable recording/reproducing of the data without loss or error.

Although the preferred embodiments of the present invention have been disclosed for illustrative purposes, those skilled in the art will appreciate that various modifications, additions and substitutions are possible, without departing from the scope and spirit of the invention as recited in the accompanying claims.

## Claims

1. A video signal recording and reproducing apparatus for a digital video cassette tape recorder, comprising:
means for varying a recording/reproducing speed by judging a type of a video tape in a recording mode and a reproducing mode;
means for inserting a block division information into a track on a video tape in the recording mode or for reproducing the recorded block division information in accordance with a track reference signal when varying the recording/reproducing speed; and
means for selectively outputting a predetermined clock signal which is appropriate for recording/reproducing signal processing when varying the recording/reproducing speed.

2. The apparatus of claim 1, wherein said recording/reproducing speed is variably controlled to be proportional to a recordable wavelength of the video tape.

3. The apparatus of claim 1, wherein the rotation speed of a head drum and a running speed of the tape are varied proportional to a recordable wavelength of the video tape.

4. A video signal recording and reproducing apparatus for a digital video cassette tape recorder, comprising:
means for inputting and outputting a digital video signal;
means for processing an inputted digital video signal to be recorded and a reproduced digital video signal into an appropriate recording format and a reproducing format respectively;
means for modulating the processed inputted digital video signal and demodulating a reproduced digital video signal;
means for recording the modulated digital signal and for reproducing a recorded digital video signal;
means for selectively inserting and reproducing a block division information into/from a track of a video tape in the recording and reproducing mode, respectively;
means for generating a timing control signal for selectively inserting and reproducing the block division information into/from the track of the video tape in the recording or reproducing mode, respectively; and
means for varying recording a recording and reproducing speed by judging the type of a video tape in the recording or reproducing mode.

5. The apparatus of claim 4, wherein said block division information insertion and reproducing means and said timing control signal generation means are positioned before the modulation/demodulation means.

6. The apparatus of claim 4, wherein said block division information insertion and reproducing means and said timing control signal generation means are position after the modulation/demodulation means.

7. A video signal recording and reproducing apparatus for a digital video cassette tape recorder, comprising:
means for judging a type of a video tape with respect to a recordable wavelength of the video tape;
means for variably controlling a recording/reproducing speed in accordance with the tape type judgement; and
means for outputting a clock signal for a signal processing in accordance with the tape type judgement when varying the recording/reproducing speed.

8. The apparatus of claim 7, wherein a frequency of said clock signal is increased when the recording/reproducing speed is increased.

9. A video signal recording and reproducing apparatus for a digital video cassette tape recorder, comprising:
means for judging the type of a video tape;
means for variably controlling a rotation speed of a head drum and a running speed of the video tape in recording and reproducing modes in accordance with the tape type judgement;
means for generating a first clock signal for a recording/reproducing signal processing when varying the rotation speed of the head drum and the running speed of the tape;
means for generating a second clock signal for a recording/reproducing signal process when varying the rotation speed of the head drum and the running speed of the tape; and
means for selecting between the first clock signal and the second clock signal in accordance with the tape type judgment.

10. A video signal recording and reproducing apparatus for a digital video cassette tape recorder, comprising:
means for receiving an inputted digital video signal to be recorded;
means for recording the inputted digital video signal on a video tape;
means for judging the type of a video tape and for generating a recording control signal in accordance therewith;
means for inserting a block division information into the digital video signal to be recorded in accordance with a track reference signal; and
means for generating a signal for controlling an insertion timing of the block division information and a recording timing of the digital video signal data.

11. A video signal recording and reproducing apparatus for a digital video cassette tape recorder, comprising:
means for receiving an inputted digital video signal to be recorded;
means for processing the inputted digital video signal for recording the same on a video tape and for recording in a memory;
means for judging the type of the video tape and for generating a recording control signal in accordance therewith;
means for inserting a block division information in the processed digital video signal to be recorded in accordance with a track reference signal; and
means for generating a signal for controlling an insertion of the block division information and a recording timing of the digital video signal's data and for generating a memory data recording /reproducing timing in accordance with the insertion position of the block division information.

12. A video signal recording and reproducing apparatus for a digital video cassette tape recorder, comprising:
means for receiving an inputted digital video signal to be recorded;
means for recording the inputted digital video signal on a video tape;
means for judging the type of the video tape and for generating a recording control signal in accordance therewith;
means for inserting a block division information indicating a relativity of neighboring tracks of a digital video signal to be recorded in accordance with a track reference signal; and
means for generating a signal for controlling the insertion of the block division information and a recording timing of the digital video signal data.

13. A video signal recording and reproducing apparatus for a digital video cassette tape recorder, comprising:
means for reproducing and processing a digital video signal recorded on a video tape;
means for reading a block division information recorded as an information indicating a relativity between neighboring tracks of the reproduced digital video signal; and
means for generating a timing for reading the block division information.

14. A video signal recording and reproducing apparatus for a digital video cassette tape recorder, comprising:
means for reproducing a digital video signal recorded on a video tape, processing reproduced data of the reproduced digital signal, and storing it in a memory;
means for removing a block division information recorded as an information indicating a relativity between neighboring tracks of the reproduced digital signal;
means for generating a timing for removing the block division information; and
means for controlling a writing/reading timing of the memory in accordance with the removing timing of the block division information.

15. A video signal recording and reproducing method for a digital video cassette tape recorder, comprising:
a first step for judging a type of a video tape in a recording mode;
a second step for maintaining a recording speed at 1x speed in case the video tape is judged a high density tape and for varying the recording speed at a predetermined higher speed in accordance with judging of the type of the tape as a low density tape;
a third step for inserting a block division information as an information indicating a relativity between neighboring tracks of a digital video signal when varying the recording speed; and
a fourth step for selectively outputting a clock signal which corresponds to a recording signal processing timing with respect to the recording speed variation.

16. A video signal recording and reproducing method for a digital video cassette tape recorder, comprising:
a first step for judging a type of a video tape in a reproducing mode;
a second step for maintaining a reproducing speed at 1x speed in case the video tape is judged to be a high density tape and for varying the reproducing speed in accordance to a predetermined higher speed in case the video tape is judged to be a low density tape;
a third step for removing a block division information recorded in a digital video signal as an information indicating a relativity between neighboring tracks when varying the reproducing speed; and
a fourth step for selectively outputting a clock signal corresponding to a reproduce signal processing timing with respect to the reproducing speed variation.
